Europäisches Patentamt

European Patent Office

Office européen des brevets

(19)

(11) **EP 0 808 378 B1**

(12) **EUROPÄISCHE PATENTSCHRIFT**

(45) Veröffentlichungstag und Bekanntmachung des Hinweises auf die Patenterteilung:
**05.07.2000   Patentblatt 2000/27**

(51) Int Cl.[7]: **C22B 7/00**

(21) Anmeldenummer: **96942170.0**

(22) Anmeldetag: **06.12.1996**

(86) Internationale Anmeldenummer:
**PCT/AT96/00248**

(87) Internationale Veröffentlichungsnummer:
**WO 97/21843 (19.06.1997 Gazette 1997/26)**

(54) **VERFAHREN ZUM AUFBEREITEN VON MÜLL ODER MÜLLFRAKTIONEN, INSBESONDERE AUTOSHREDDERLEICHTFRAKTION**

PROCESS FOR PROCESSING WASTE OR FRACTIONS THEREOF, ESPECIALLY LIGHT CAR SHREDDER FRACTIONS

PROCEDE DE TRAITEMENT DE DECHETS OU DE FRAGMENTS DE DECHETS, NOTAMMENT DE FRAGMENTS LEGERS DE DECHETS PROVENANT D'UN BROYEUR POUR AUTOMOBILES

(84) Benannte Vertragsstaaten:
**AT BE CH DE DK ES FR GB IT LI LU NL**
Benannte Erstreckungsstaaten:
**SI**

(30) Priorität: **11.12.1995  AT  200595**

(43) Veröffentlichungstag der Anmeldung:
**26.11.1997   Patentblatt 1997/48**

(73) Patentinhaber: **"HOLDERBANK" Financière Glarus AG**
**8750 Glarus (CH)**

(72) Erfinder: **EDLINGER, Alfred**
**CH-5400 Baden (CH)**

(74) Vertreter: **Haffner, Thomas M., Dr.**
**Patentanwalt**
**Schottengasse 3a**
**1014 Wien (AT)**

(56) Entgegenhaltungen:
**EP-A- 0 115 928        EP-A- 0 551 992**
**EP-A- 0 572 769        EP-A- 0 707 083**
**EP-A- 0 714 860        DE-A- 4 123 626**
**GB-A- 785 325**

• **PATENT ABSTRACTS OF JAPAN vol. 96, no. 3, 29.März 1996 & JP 07 300331 A (TAIHEIYO KINZOKU KK), 14.November 1995,**

**Beschreibung**

Die Erfindung bezieht sich auf ein Verfahren zum Aufarbeiten von Müll- oder Müllfraktionen, wie z.B. Haushaltsmüll, Autoshredderleichtfraktionen od.dgl., bei welchem das Einsatzmaterial einer Pyrolyse, einer Vergasung und/oder einer Verbrennung unterworfen wird.

Bekannte Verfahren der eingangs genannten Art zielen darauf ab, eine möglichst weitgehende Verschlackung sicherzustellen, worauf durch geeignete Schlackennachbehandlung höherwertige Endprodukte erzielt werden sollen. Diese bekannte Verfahrensweise zielte daher in erster Linie auf eine weitestgehend vollständige Verschlackung unter vollständiger Oxidation der brennbaren Bestandteile ab, worauf durch gezielte Reduktionsschritte metallisierbare Anteile oder Legierungen aus der Schlacke wiederum ausgeschieden wurden.

Insbesondere bei stark schwermetallbelasteten Rückständen, und im besonderen bei chromhaltigen Rückständen, ist eine derartige Schlackenschmelze, wie sie bei vollständiger Oxidation der Ausgangsmaterialien erzielt wird, überaus aggressiv und es hat sich herausgestellt, daß eine Abtrennung von überaus störenden Bestandteilen wie Chrom bei der klassischen Verfahrensführung erst am Ende des Verfahrens und nicht in dem erwünschten Ausmaß gelingt und daß alle vorangehenden Fraktionen mehr oder minder stark, beispielsweise mit Chrom, kontaminiert bleiben.

Die Erfindung zielt nun darauf ab, ein Verfahren der eingangs genannten Art zu schaffen, mit welchem unerwünschte Metalle besser abgetrennt werden können und mit welchem für die Weiterverarbeitung reinere Produkte zur Verfügung gestellt werden können. Insbesondere zielt die Erfindung hierbei darauf ab, künstliche Hochofenschlacke herzustellen sowie marktgängige Metallverbindungen und Metallegierungen abzutrennen. Zur Lösung dieser Aufgabe besteht die Erfindung im wesentlichen darin, daß die Pyrolyse-, Vergasungs- und/oder Verbrennungsrückstände unter reduzierenden Bedingungen erhitzt werden, und daß die reduzierten metallischen Anteile einer stufenweisen Oxidation unterworfen werden, wobei in einer ersten Oxidationsstufe eine solche Sauerstoffmenge zur Verfügung gestellt wird, die eine vollständige Umsetzung zu Chromeisenstein gewährleistet. Dadurch, daß die genannten Rückstände nun abweichend von der bekannten Verfahrensweise nicht mehr einer vollständigen Oxidation unterworfen sondern, im Gegenteil, unter reduzierenden Bedingungen eingeschmolzen werden, wird unmittelbar eine Schlacke gebildet, in welcher der Anteil an Metalloxiden wesentlich verringert ist. Vor allen Dingen kann sichergestellt werden, daß die aus dem reduzierend gefahrenen Schachtofen abgezogene Schlacke eine wesentlich bessere Reinheit aufweist und von Schwermetallen bzw. Chrom nicht unzulässig kontaminiert ist. Schwermetallchloride verflüchtigen sich bei der reduzierenden Verfahrensweise im Schachtofen und können in Form von Filterstäuben rückgewonnen werden. Derartige Filterstäube, wie beispielsweise $CuCl$, $ZnCl_2$ und $PbCl_2$ können in der Folge basisch gewaschen werden und dem nachfolgenden Oxidationskonverter vor den Frischen zugegeben werden, wobei die entstehenden Schwermetalloxide reduziert werden und Zink, Blei, Kadmium oder Quecksilber beispielsweise aus der Gasphase rückgewonnen werden können. Kupfer, Nickel, Zinn und Antimon gehen bei dieser Verfahrensweise in das Metallbad, wobei Chrom in besonders einfacher Weise durch eine erste Oxidation bereits vollständig abgetrennt werden kann. Diese vollständige Abtrennung von Chrom in einer ersten auf den reduzierenden Einschmelzvorgang folgenden Oxidationsstufe führt unmittelbar zu wesentlich reineren weiteren Produkten, welche in der Folge zu brauchbaren Metallen bzw. Metallegierungen aufgearbeitet werden können. Die frühzeitige Elimination von Chrom reduziert in der Folge auch die Gefahr einer vorzeitigen Zerstörung von Konverterauskleidung, wobei gleichzeitig ein Zwischenprodukt gewonnen werden kann, das in der Folge einfach zur Zurückgewinnung von Chrom genützt werden kann.

Mit Vorteil wird hiebei so vorgegangen, daß der aufschwimmende Chromeisen-Spinell abgezogen wird und zu einer Ferro-Chrom-Carburé-Legierung reduziert wird. Alternativ könnte natürlich auch zu Chromoxid oxidiert werden. Bei Frischtemperaturen von über 1350°C würde das gebildete Chromoxid mit einem Schmelzpunkt von 2435°C gleichfalls abgetrennt werden und könnte gleichfalls von der Schmelze abgezogen werden. In diesem Fall könnte die Weiterverarbeitung zu Hochleistungsschleifmitteln, Farbpigmenten od.dgl. erfolgen.

Gemäß einer bevorzugten Weiterbildung des erfindungsgemäßen Verfahrens wird so vorgegangen, daß nach dem Abziehen der Chromeisen-Spinellfraktion auf die Metalloberfläche Kalk oder Kalkstein aufgebracht wird und das Oxidationspotential zur Ausbildung einer Calzium-Ferritschlacke erhöht wird, wobei mit Vorteil Kalkstein kontinuierlich als Kühlmittel zugesetzt wird.

Durch den Zusatz von Kalk bzw. Branntkalk lassen sich Schwermetall-Schwefel-Verbindungen, insbesondere $Cu_2S$, bereits bei der reduzierenden Schmelze zersetzen, wobei $Cu_2O$ und $CaS$ gebildet wird. $Cu_2O$ kann in der Folge mit CO reduziert werden, wobei Kupfer sich in der "Rast" sammelt und CaS verschlacken kann.

Bei dem reduzierenden Einschmelzvorgang werden Eisenoxide reduziert und es wird beispielsweise Eisenschwamm gebildet. Mit Vorteil kann hierbei so vorgegangen werden, daß in das Metallbad des Einschmelzreaktors Al eingetragen, insbesondere eingeblasen, wird wodurch Aluminium, insbesondere Schrottaluminium im unteren Bereich des Schachtofens mit der entstehenden Flüssigmetallphase legiert. Auf der Flüssigmetallphase des reduzierenden Einschmelzvorganges schwimmt eine synthetische Hochofenschlacke auf, wobei Schlacken-Chromoxidgehalte, die durch Kohlenmonoxid noch nicht reduziert wurden durch die auf diese Weise gebildete flüssige Aluminium-Eisen-Legierung praktisch quantitativ in die Legierung reduziert werden. Zur Unterstützung kann Aluminium hier beispielsweise mittels Unterbaddüsen als Aluminiumpulver in die flüssige Metallphase des reduzierenden Einschmelzreaktors eingeblasen werden.

Nach dem Abtrennen des Chroms und der gebildeten Calzium-FerritSchlacke kann mit Vorteil so vorgegangen werden, daß das nach Abstechen der Calzium-Ferritschlacke verbleibende Metallbad soweit raffiniert wird, daß der Eisengehalt kleiner 80 Gew.-%, vorzugsweise 40 bis 60 Gew.-%, Rest Cu, Sb und weitere Eisenbegleiter eingestellt wird. Ein derartiges Metallbad eignet sich für die Herstellung wertvoller Buntmetallegierungen bzw. für die weitere Rückgewinnung reiner Metalle.

Wie bereits erwähnt, wird mit Vorteil die reduzierende Erhitzung in einem Einschmelzreaktor, insbesondere in einem Schachtofen unter Zusatz von Kalk, Bauxit und Koks vorgenommen, wobei die entsprechende reduzierende Atmosphäre im Schachtofen in einfacher Weise dadurch sichergestellt werden kann, daß je Tonne Einsatzmaterial 350 bis 600 kg, insbesondere 500 kg Koks, eingesetzt werden.

Zur Verbesserung der Energiebilanz wird mit Vorteil so vorgegangen, daß das aus dem Schmelzreaktor abgezogene Metallbad in die erste Oxidationsstufe flüssig eingebracht wird. Alternativ kann naturgemäß der Abstich zu Knüppeln gegossen werden, wobei die Knüppel dann in einem entsprechenden zentralen Konverter weiter aufgeschmolzen werden.

Die im reduzierenden Schmelzvorgang gebildete flüssige Schlacke ist, wie bereits eingangs erwähnt, von Schwermetallen und Chrom weitestgehend frei und zeichnet sich durch wesentlich geringere Eisenoxidgehalte aus. Mit Vorteil wird diese Schlacke so weiterverarbeitet, daß die flüssige Schlacke des reduzierend gefahrenen Schachtofens granuliert,gemahlen und mit Zement vermischt wird. Zur Verbesserung der Energiebilanz können weiters die aus dem Schachtofen abgezogenen brennbaren Gase als Reduktionsmittel in einem Direktreduktionsverfahren eingesetzt werden.

Im Oxidationskonverter kann eine Differenzierung des Metallbades in zwei Metallschmelzphasen bei bestimmten Temperaturen beobachtet werden. Eine derartige Ausbildung gesonderter Metallschmelzphasen kann für gegebenenfalls gewünschte zusätzliche Vorabtrennungen eingesetzt werden, wobei diese Verfahrensweise naturgemäß nur dann relevant ist, wenn relativ hoch kupferhaltige Rückstände aufgearbeitet werden. Mit Vorteil wird hierbei so vorgegangen, daß im Oxidationsreaktor eine Phasentrennung vorgenommen wird, wobei bei 1280 bis 1350°C eine schwerere Cu-Phase mit 4 bis 10 Gew.-% Fe, Sn, Ni und Sb < 5 Gew.-

% und eine leichtere Fe-Phase mit 5 bis 10 Gew.-% Cu und Restmengen an Sn, Ni, Sb und Cr abgezogen wird, worauf die leichtere Phase der ersten Oxidation unterworfen wird, wobei, wie bereits erwähnt, diese Phasentrennung nur dann sinnvoll erscheint, wenn bereits in dieser Stufe eine nennenswerte Menge an Kupferphase ausgebildet wird.

Die Erfindung wird nachfolgend anhand eines Ausführungsbeispieles näher erläutert.

Ausführungsbeispiel:

Eingabe-Material-Analyse:

| Gesamtanalyse: | |
| --- | --- |
| $C_{fix}$ | 10 Gew.-% |
| Schrotteisen | 10 Gew.-% |
| Schrottalu | 2 Gew.-% |
| Mineralisches | 78 Gew.-% |

| Analyse des Mineralischen: | |
| --- | --- |
| $SiO_2$ | 47 Gew.-% |
| CaO | 16 Gew.-% |
| $Al_2O_3$ | 11 Gew.-% |
| $Fe_2O_3$ | 9 Gew.-% |
| MgO | 3 Gew.-% |
| $Na_2O$ | 4,5 Gew.-% |
| $K_2O$ | 1,5 Gew.-% |
| $TiO_2$ | 2 Gew.-% |
| Cl | 0,8 Gew.-% |
| $SO_3$ | 1,5 Gew.-% |
| Cu | 1,2 Gew.-% |
| Cr | 0,5 Gew.-% |
| Zn | 0,7 Gew.-% |
| Pb | 0,4 Gew.-% |
| Sb | 0,1 Gew.-% |

Eine Tonne Vergasungsrückstand wurde mit 220 kg Branntkalk, 100 kg Bauxit ($Al_2O_3$) und 500 kg Koks versetzt, dem reduzierend betriebenen Schachtofen zugesetzt und schmelzverflüssigt.

Produkte: Die bei 1500°C abgestochene Schlacke wies folgende Analyse auf:

| | |
| --- | --- |
| $SiO_2$ | 41 Gew.-% |
| CaO | 32 Gew.-% |
| $Al_2O_3$ | 17 Gew.-% |
| MgO | 2,5 Gew.-% |
| $Na_2O$ | 3 Gew.-% |
| $K_2O$ | 1 Gew.-% |

(fortgesetzt)

| | |
|---|---|
| TiO$_2$ | 2 Gew.-% |
| S | 0,5 Gew.-% |

Die Schwermetall-Analyse ergab für jedes Element Konzentrationen unter 100 ppm. Die flüssige Schlacke wurde wassergranuliert, gemahlen (auf 3200 Blaine) und mit Portland-Zement gemischt. Dieser Hochofenschlackenzement übertrifft die konventionellen, so wurde z.B ein Keil-Index nach 28 Tagen von 115 % erreicht.

Die bei 1500°C abgestochene Ofensau weist folgende Zusammensetzung auf:

| | |
|---|---|
| Fe | 87 Gew.-% |
| Cu | 6 Gew.-% |
| Cr | 3 Gew.-% |
| Sb | 1 Gew.-% |
| C | 3 Gew.-% |

Die flüssige Ofensau wurde in einem diskontinuierlich betriebenen Oxidationskonverter schrittweise partiell (mit steigendem Oxidationspotential) oxidiert.

1.) Spinellbildung

Als erstes Oxidationsprodukt wurde ein Chromeisenstein (Spinell) erhalten, der sich in Form fester Spinell-Kristalle an der Metallbadoberfläche abscheidet und von dort abgezogen wurde. Das Oxidationspotential wird z.B. mittels O$_2$/N$_2$-Gemisch so eingestellt, daß die Spinellbildung optimiert wird.

Chemische Zusammensetzung dieses Spinells: FeO-Cr$_2$O$_3$.

Um den erwähnten Spinell zu bilden, müssen Cr, C und etwas Fe oxidiert werden. Die Oxidation mit O$_2$ geschieht vollständig. Im vorliegenden Fall (Beispiel) werden dazu 60 kg O$_2$ gebraucht. Dabei werden 15 kg Fe zu FeO oxidiert und es entstehen 70 kg CO. Die Angaben beziehen sich immer auf 1 t Ofensau.

Pro t Ofensau entstehen somit 66,3 kg Chromeisenstein, aus dem die erwähnte Ferro-Chromium-Carburé-Legierung hergestellt werden kann.

Da die Reaktion sehr exotherm ist, kann zur Systemschonung auch mit CO$_2$ bzw. einen CO$_2$/O$_2$-Gemisch mit geringerer Oxidations-Enthalpie oxidiert werden.

Eine weitere Spinellbildungsvariante besteht darin, "Magnesium-Spinell" (MgCr$_2$O$_4$) herzustellen, einen Rohstoff für die Feuerfest-Industrie. Dabei wird Magnesitpulver (MgCo$_3$) in die Schmelze eingeblasen:

$$MgCO_3 \rightarrow MgO + CO_2$$

$$2\ Cr + 3\ CO_2 \rightarrow Cr_2O_3 + 3CO$$

$$MgO + Cr_2O_3 \rightarrow MgCr_2O_4$$

Naturgemäß kann das gebildete CO metallurgisch und/oder energetisch im Prozeß ausgenützt werden.

Der Chromeisen-Spinell kann konventionell zu einer hochprozentigen Ferro-Chromium-Carburé-Legierung mit nachfolgender Zusammensetzung: 33 Gew.-% Fe, 61 Gew.-% Cr und 6,5 Gew.-% C reduziert werden.

2.) Ferrit-Schlackenbildung

Nachdem alles Chrom in Spinell übergeführt wurde, wurde das Oxidationspotential erhöht und auf die Metallbadoberfläche gemahlener Kalkstein aufgelegt. Das Eisen des Metallbades wurde dabei oxidierend verschlackt, und es entstand eine dünnflüssige Calcium-Ferrit-Schlacke. Da die "Eisenverbrennung" extrem exotherm ist, hat es sich als sehr vorteilhaft herausgestellt, Kalkstein als "Kühlmittel" einzusetzen.

Der Konvertinhalt (nach Spinellbildung) wies nachfolgende Zusammensetzung auf: 92 Gew.-% Fe, 6,5 Gew.-% Cu, 1 Gew.-% Sb. Um den Gehalt der Cu/Sb-Legierung von 7,5 % auf 20 % (Abnahme Kupferhütte) zu erhöhen müssen also 620 kg Fe als Ferrit verschlackt werden. Dazu werden 266 kg O$_2$ (in Luft, CO$_2$ aus Calzination) und 554 kg CaCO$_3$ benötigt. Es entstehen dabei 1.200 kg Ferritschlacke/t (Konvertschmelze).

$$CaCO_3 \rightarrow CaO + CO_2 \text{ (Calcination = Kühlwirkung)}$$

$$CaO + Fe_2O_3 \rightarrow CaFe_2O_4 \text{ (Ferrit-Bildung)}$$

Diese Schlacken wiesen Eisengehalte zwischen 45 und 55 % auf und stellen eine ideale Möllerungskomponente für den Roheisen-Hochofen dar.

3.) Kupferlegierung

Im Konverter verblieb eine Kupferlegierung mit folgender Zusammensetzung: 83 Gew.-% Cu, 12 Gew-% Sb, 3 Gew.-% Fe.

Die Gesamt-Energiebilanz des Verfahrens errechnet sich wie folgt:

Reduktion

Um den Vergasungsrückstand auf Schmelztemperatur zu erwärmen, werden theoretisch 2025 MJ/t Energie benötigt. Dieser Erwärmungs- und Schmelzvorgang findet im Schachtofen statt, der einen thermischen Wirkungsgrad von 65 % aufweist. Somit muß mit einem akutellen Wärmeverbrauch von ca. 3,5 GJ/t gerechnet werden. Um diese Wärmemenge aufzubringen, müssen ca. 600 kg C/t zu CO vergast werden. Da die Analyse des Vergasungsproduktes bereits 10 % $C_{fix}$ aufweist, werden dafür 800 kg $O_2$ sowie 500 kg Koks, Koksguß, PETKOK, od.dgl. verwendet.

Der Vergasungs-Sauerstoff kann evtl. durch Luft ganz oder teilweise ersetzt werden.

Den Schachtofen verlassen ca. 1400 kg CO/t (= 14 GH/t), welche vorteilhafterwseise nach einer Gasaufbereitung (z.B. Aktivkoksfilter, Gegenstrom) als Alternativ-Brennstoff in der Zementindustrie eingesetzt werden können. Eine andere Verwendungsmöglichkeit wäre der Einsatz als Reduktionsmittel in einem Direkt-Reduktionsverahren (z.B.Midrex).

Oxidation

Die Oxidation im Konverter verläuft auf Grund der Spinellbildung und der Feritschlackenbildung stark exotherm. Als Oxidationsmittel können gestuft Wasserdampf, Luft, $O_2$, gegebenenfalls mit $N_2$ oder Ar verdünnt, Eisenerz oder Ferritschlacke für die Spinellbildung und Luft bzw. $O_2$ für die Ferritschlackenbildung eingesetzt werden.

**Patentansprüche**

1. Verfahren zum Aufarbeiten von Müll- oder Müllfraktionen, wie z.B. Haushaltsmüll, Autoshredderleichtfraktionen od.dgl., bei welchem das Einsatzmaterial einer Pyrolyse, einer Vergasung und/ oder einer Verbrennung unterworfen wird, dadurch gekennzeichnet, daß die Pyrolyse-, Vergasungs- und/oder Verbrennungsrückstände unter reduzierenden Bedingungen erhitzt werden, und daß die reduzierten metallischen Anteile einer stufenweisen Oxidation unterworfen werden, wobei in einer ersten Oxidationsstufe eine solche Sauerstoffmenge zur Verfügung gestellt wird, die eine vollständige Umsetzung zu Chromeisenstein gewährleistet.

2. Verfahren nach Anspruch 1, dadurch gekennzeichnet, daß der aufschwimmende Chromeisen-Spinell abgezogen wird und zu einer Ferro-Chrom-Carburé-Legierung reduziert wird.

3. Verfahren nach Anspruch 2, dadurch gekennzeichnet, daß nach dem Abziehen der Chromeisen-Spinellfraktion auf die Metalloberfläche Kalk oder Kalkstein aufgebracht wird und das Oxidationspotential zur Ausbildung einer Calzium-Ferritschlacke erhöht wird.

4. Verfahren nach Anspruch 3, dadurch gekennzeichnet, daß Kalkstein kontinuierlich als Kühlmittel zugesetzt wird.

5. Verfahren nach Anspruch 3 oder 4, dadurch gekennzeichnet, daß das nach Abstechen der Calzium-Ferritschlacke verbleibende Metallbad soweit raffiniert wird, daß der Eisengehalt kleiner 80 Gew.-%, vorzugsweise 40 bis 60 Gew.-%, Rest Cu, Sb und weitere Eisenbegleiter eingestellt wird.

6. Verfahren nach einem der Ansprüche 1 bis 5, dadurch gekennzeichnet, daß die reduzierende Erhitzung in einem Einschmelzreaktor, insbesondere in einem Schachtofen unter Zusatz von Kalk, Bauxit und Koks vorgenommen wird.

7. Verfahren nach einem der Ansprüche 1 bis 6, dadurch gekennzeichnet, daß je Tonne Einsatzmaterial 350 bis 600 kg, insbesondere 500 kg Koks, eingesetzt werden.

8. Verfahren nach Anspruch 6 oder 7, dadurch gekennzeichnet, daß das aus dem Schmelzreaktor abgezogene Metallbad in die erste Oxidationsstufe flüssig eingebracht wird.

9. Verfahren nach einem der Ansprüche 6 bis 8, dadurch gekennzeichnet, daß die flüssige Schlacke des reduzierend gefahrenen Schachtofens granuliert gemahlen und mit Zement vermischt wird.

10. Verfahren nach einem der Ansprüche 6 bis 9, dadurch gekennzeichnet, daß die aus dem Schachtofen abgezogenen brennbaren Gase als Reduktionsmittel in einem Direktreduktionsverfahren eingesetzt werden.

11. Verfahren nach einem der Ansprüche 6 bis 10, dadurch gekennzeichnet daß in das Metallbad des Einschmelzreaktors Al eingetragen, insbesondere eingeblasen, wird.

12. Verfahren nach einem der Ansprüche 1 bis 11, dadurch gekennzeichnet, daß im Oxidationsreaktor eine Phasentrennung vorgenommen wird, wobei bei 1280 bis 1350°C eine schwerere Cu-Phase mit 4 bis 10 Gew.-% Fe, Sn, Ni und Sb < 5 Gew.-% und eine leichtere Fe-Phase mit 5 bis 10 Gew.-% Cu und Restmengen an Sn, Ni, Sb und Cr abgezogen wird, worauf die leichtere Phase der ersten Oxidation unterworfen wird.

**Claims**

1. A process for processing waste or waste fractions such as, e.g., household refuse, car shredder light fractions or the like, in which the charging material is subjected to pyrolysis, gasification and/or combustion, characterized in that the residues from pyrolysis, gasification and/or combustion are heated under reducing conditions and that the reduced metallic portions are subjected to a stepwise oxidation, wherein in a first oxidation stage an amount of oxygen is made available that ensures the complete reaction to chromic ironstone.

2. A process according to claim 1, characterized in that the floating chromic iron spinel is drawn off and reduced to a ferrochromium carburé alloy.

3. A process according to claim 2, characterized in that, after having drawn off of the chromic iron spinel fraction, lime or limestone is applied onto the metal surface and the oxidation potential is increased with a view to forming a calcium ferrite slag.

4. A process according to claim 3, characterized in that limestone is continuously added as a coolant.

5. A process according to claim 3 or 4, characterized in that the metal bath remaining after tapping of the calcium ferrite slag is refined to an extent such that an iron content of less than 80% by weight, preferably 40 to 60% by weight, is adjusted, the balance being Cu, Sb and other iron companions.

6. A process according to any one of claims 1 to 5, characterized in that the reducing heating is effected in a meltdown reactor, in particular in a shaft furnace, under the addition of lime, bauxite and coke.

7. A process according to any one of claims 1 to 6, characterized in that 350 to 600 kg, in particular 500 kg, coke are used per ton of charging material.

8. A process according to claim 6 or 7, characterized in that the metal bath drawn off the melting reactor is introduced into the first oxidation stage in the liquid state.

9. A process according to any one of claims 6 to 8, characterized in that the liquid slag of the reducingly operated shaft furnace is granulated, ground and mixed with cement.

10. A process according to any one of claims 6 to 9, characterized in that the combustible gases drawn off the shaft furnace are used as reducing agents in a direct reduction process.

11. A process according to any one of claims 6 to 10, characterized in that Al is introduced, in particular blown, into the metal bath of the meltdown reactor.

12. A process according to any one of claims 1 to 11, characterized in that a phase separation is effected in the oxidation reactor, whereby a heavier Cu phase with 4 to 10% by weight Fe, Sn, Ni and Sb <5% by weight and a lighter Fe phase with 5 to 10% by weight Cu and residual quantities of Sn, Ni, Sb and Cr are drawn off at 1280 to 1350°C, whereupon the lighter phase is subjected to said first oxidation stage.

## Revendications

1. Procédé de traitement des ordures ou fractions d'ordures, comme par exemple les ordures domestiques, les fractions légères de défibreurs automatiques ou analogues, dans lequel on soumet le matériau utilisé à une pyrolyse, à une gazéification et/ou à une combustion, caractérisé en ce qu'on chauffe les résidus de pyrolyse, de gazéification et/ou de combustion dans des conditions réductrices, et en ce qu'on soumet les fractions métalliques réduites à une oxydation par étapes, opération dans laquelle dans une première étape d'oxydation, on met à disposition une quantité d'oxygène qui garantit une transformation complète en fer chromé.

2. Procédé selon la revendication 1, caractérisé en ce qu'on retire la spinelle de fer chromé qui surnage et en ce qu'on la réduit en un alliage de carbure de ferrochrome.

3. Procédé selon la revendication 2, caractérisé en ce qu'après enlèvement de la fraction spinelle de fer chromé, on dépose sur la surface métallique de la chaux ou du calcaire et en ce qu'on accroît le potentiel d'oxydation pour la formation d'un laitier de ferrite de calcium.

4. Procédé selon la revendication 3, caractérisé en ce qu'on ajoute le calcaire de façon continue comme agent de refroidissement.

5. Procédé selon la revendication 3 ou 4, caractérisé en ce qu'on raffine le bain de métal restant après décolletage du laitier de ferrite de calcium jusqu'à ce que la teneur en fer soit inférieure à 80 % en poids, de préférence comprise entre 40 et 60 % en poids, le reste étant constitué de Cu, Sb et d'autres corps qui accompagnent le fer.

6. Procédé selon l'une des revendications 1 à 5, caractérisé en ce qu'on procède au chauffage réducteur dans un réacteur de fusion, en particulier dans un four à cuve, avec addition de chaux, de bauxite et de coke.

7. Procédé selon l'une des revendications 1 à 6, caractérisé en ce qu'on utilise par tonne de matériau employé, 350 à 600 kg, en particulier 500 kg de coke.

8. Procédé selon la revendication 6 ou 7, caractérisé en ce qu'on introduit à l'état liquide dans la première étape d'oxydation le bain métallique retiré du réacteur de fusion.

9. Procédé selon l'une des revendications 6 à 8, caractérisé en ce qu'on granule le laitier liquide du four à cuve que l'on a fait fonctionner de façon réductrice et en ce qu'on le mélange avec du ciment.

10. Procédé selon l'une des revendications 6 à 9, caractérisé en ce qu'on utilise comme réducteurs dans un procédé de réduction directe les gaz combustibles retirés du four à cuve.

11. Procédé selon l'une des revendications 6 à 10, caractérisé en ce qu'on introduit, en particulier en ce qu'on insuffle, de l'aluminium dans le bain métallique du réacteur de fusion.

12. Procédé selon l'une des revendications 1 à 11, caractérisé en ce qu'on procède, dans le réacteur d'oxydation, à une séparation de phases, opération dans laquelle on retire entre 1280 et 1350°C une phase Cu lourde avec 4 à 10 % en poids de Fe, Sn, Ni et Sb à moins de 5 % en poids, et une phase plus légère avec 5 à 10 % en poids de Cu et des quantités résiduelles de Sn, Ni, Sb et Cr, après quoi on soumet la phase plus légère à la première oxydation.